Europäisches Patentamt

European Patent Office

Office européen des brevets

(19)

(11) Publication number : **0 257 141 B1**

(12) **EUROPEAN PATENT SPECIFICATION**

(45) Date of publication of patent specification :
16.01.91 Bulletin 91/03

(51) Int. Cl.⁵ : **B62B 7/12, B60N 2/24,**
    **A47D 13/02**

(21) Application number : 86306051.3

(22) Date of filing : 06.08.86

(54) Multi-function child carrier.

(43) Date of publication of application :
02.03.88 Bulletin 88/09

(45) Publication of the grant of the patent :
16.01.91 Bulletin 91/03

(84) Designated Contracting States :
CH DE FR GB LI NL SE

(56) References cited :
US-A- 2 508 905
US-A- 2 509 103
US-A- 3 984 115
US-A- 4 157 837

(73) Proprietor : Dick, Timber
4320 Zenobia Street
Denver Colorado 80212 (US)

(72) Inventor : Dick, Timber
4320 Zenobia Street
Denver Colorado 80212 (US)

(74) Representative : Corin, Christopher John et al
Mathisen Macara & Co. The Coach House 6-8
Swakeleys Road
Ickenham Uxbridge UB10 8BZ (GB)

## Description

This invention relates to an improved child carrier or stroller which is convertible for use as a backpack or car seat carrier as well as being collapsible into a compact condition for storage.

Innumerable types of baby carriages or strollers have been devised which are capable of use as a conveyance for one or more children. In addition, strollers both of the two-wheel and four-wheel variety have been devised which can be converted into car seat units.

U.S. Patent No. 2508905 discloses a folding chair for babies which is convertible into a car seat by partial folding of the legs in an upward direction. U.S. Patent No. 3984115 discloses a child carrier having a plurality of generally U-shaped frame members interconnected to define a seat and front and rear leg members depending downwardly from the seat such that the legs can be raised into a partially folded position to convert the carrier into a backpack carrier. U.S. Patent No. 4157837, on which the prior art portion of claim 1 is based, describes a child carrier which is convertible between a stroller, a reclining baby bed and a backpack carrier. The carrier described in this patent has a seat mounting frame, a lower wheel frame assembly depending downwardly from the seat mounting frame, and a handle with an angled end portion. This handle is designed to fold into a position aligned with the wheels so as to be out of the way when the carrier is to be used as a backpack carrier. U.S. Patent No. 2509103 discloses a child carrier having a pair of wheels which can be pivoted between a downwardly extending position and a raised position to enable positioning of the carrier on a car seat.

The aim of the present invention is to construct and arrange a carrier so as to be readily convertible between a stroller and a car seat or backpack in a minimum number of steps without necessitating removal of the child from the carrier and so that the wheels of the carrier will not soil the surface supporting the carrier when used as a car seat.

To this end, according to the invention there is provided a child carrier having a seat-mounting frame and a lower wheel frame assembly depending downwardly from said seat mounting frame, a seat portion disposed on said seat-mounting frame and a handle member normally extending rearwardly of said seat-mounting frame, said handle member terminating in a band-engaging, angle end portion, wheels supported for downward extension from said wheel frame assembly, and pivot means pivotally interconnecting said handle member to said seat mounting frame for pivotal movement of said handle member about a horizontal axis from a first position in which said handle member extends rearwardly of said seat-mounting frame when in a raised position as a stroller to a lowered position in which said handle member is directed downwardly with said angled end portion extending forwardly characterised by said wheel frame assembly including font and vear wheels, the handle member in the lowered position extending in spaced relation beneath said wheels to support said carrier on a level surface with said wheels spaced above the level surface.

When the carrier is converted into a car seat, the handle member is moved to the downward position so that its angled end portion serves as a base support platform with the wheels spaced above the car seat or floor surface upon which the carrier rests, thereby preventing soiling of the seat or other surface. In this position of the handle the carrier is also adapted for use as a backpack carrier through the utilization of shoulder straps and a hip support pad on the side frame members of the upper handle.

The carrier in accordance with the invention may be constructed so as to permit full collapsing into a compact unit for storage, and also so as to permit utilization of other standard child carrier accessories, such as, foot rests, folding racks, food trays and to permit adjustable disposition of the seat portion between upright and reclined positions.

In a preferred form, the wheels remain stationary and the handle folds to a position beneath the wheel frame assembly and wheels, the folding movement being controlled by a folding link assembly. In modified forms, the front and rear wheels may be pivotally connected to the wheel frame assembly and arranged to be responsive to downward folding movement of the handle to pivot from a downwardly extending position upwardly into a substantially horizontal extending position.

Embodiments of the invention will now be described, by way of example, with reference to the accompanying drawings, in which :-

Figure 1 is a front perspective view of one embodiment of this invention ;

Figure 2 is a rear perspective view of the embodiment shown in Figure 1 ;

Figure 3 is a side elevational view of the embodiment shown in Figures 1 and 2 ;

Figure 4 is an enlarged view in detail showing a folding link portion ;

Figure 5 is a side elevational view illustrating conversion from a stroller into a car seat carrier ;

Figure 6 is an enlarged view of a connector block employed in the form of Figure 1 ;

Figure 6A is an enlarged view of another form of connector block employed as a part of the folding link assembly ;

Figure 7 is a side elevational view of a modified form of child carrier ;

Figure 8 is a front view showing the wheel assembly of the modified form of carrier in a collapsed position ;

Figure 9 is a side view of the modified form of carrier shown in Figures 7 and 8 in the collapsed position ;

Figure 10 is a side elevational view of still another modified form of child carrier ; and

Figure 11 is a front view of the modified form of carrier shown in Figure 10 with the wheels collapsed.

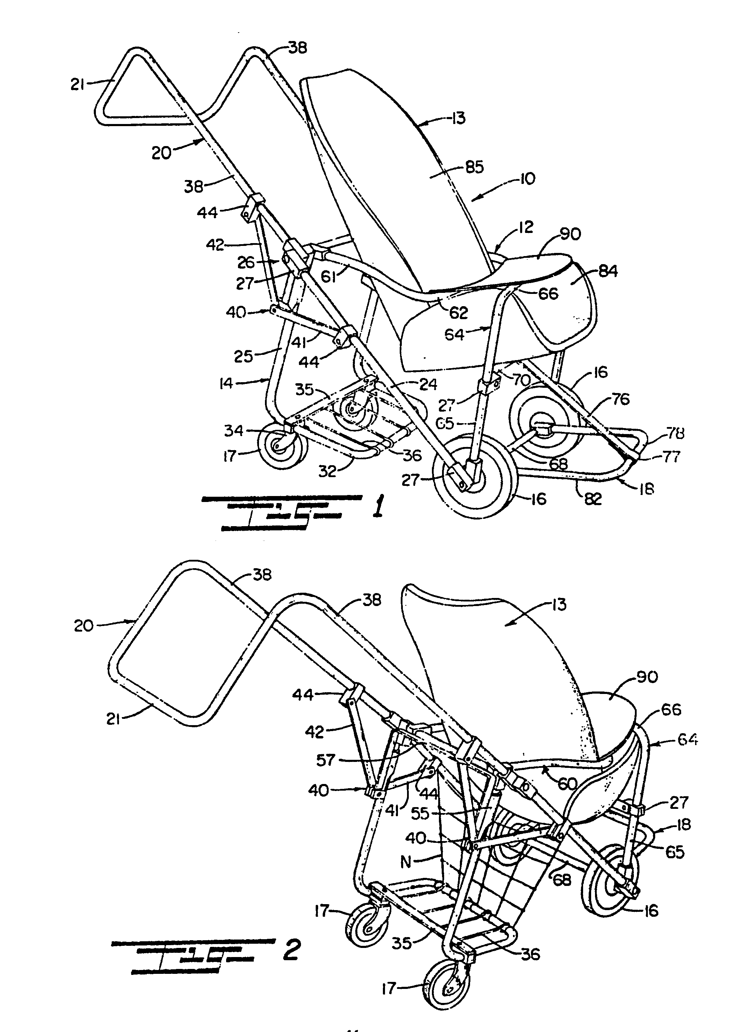

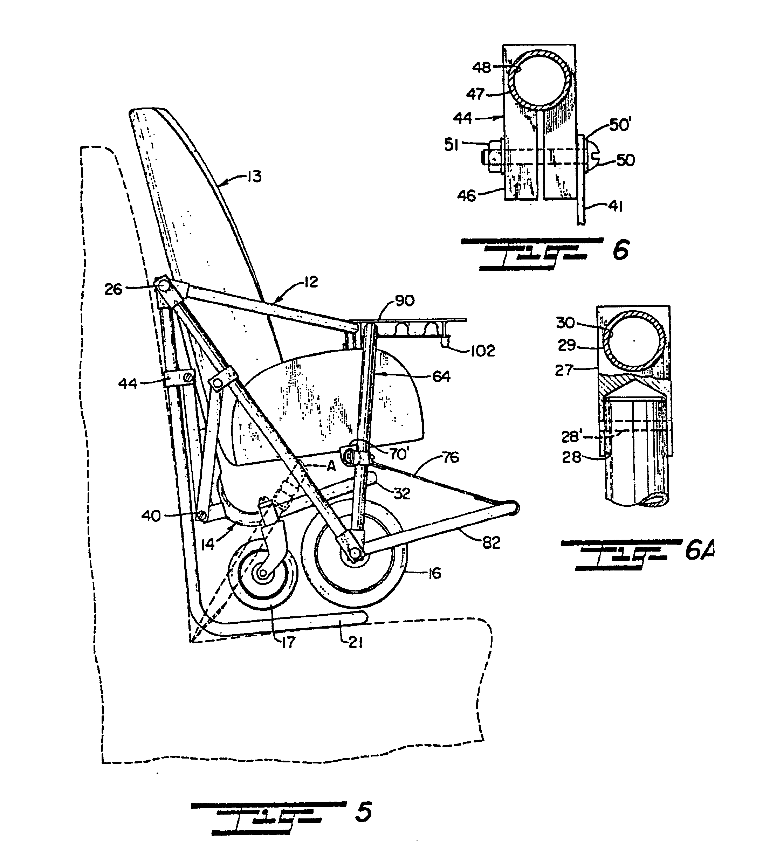

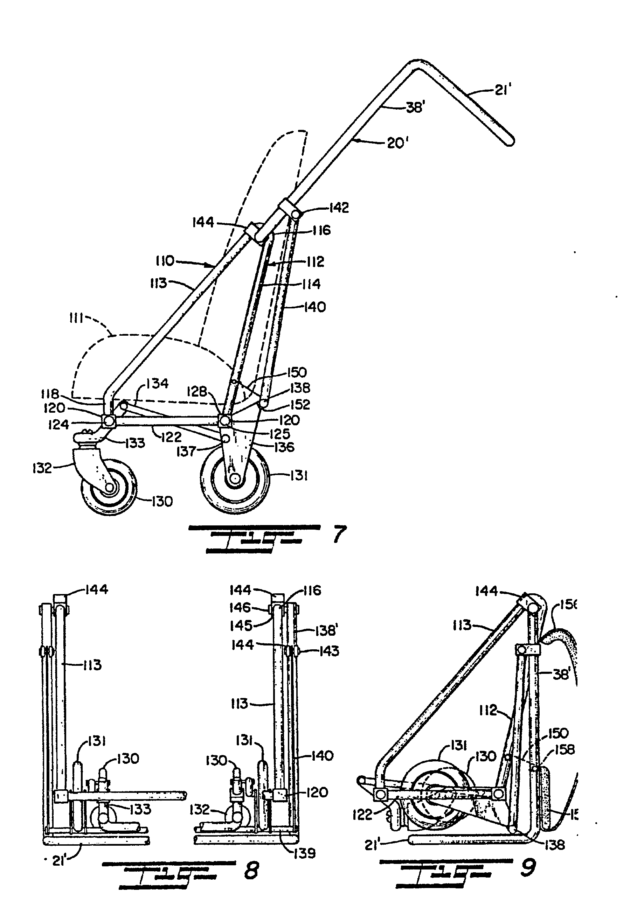

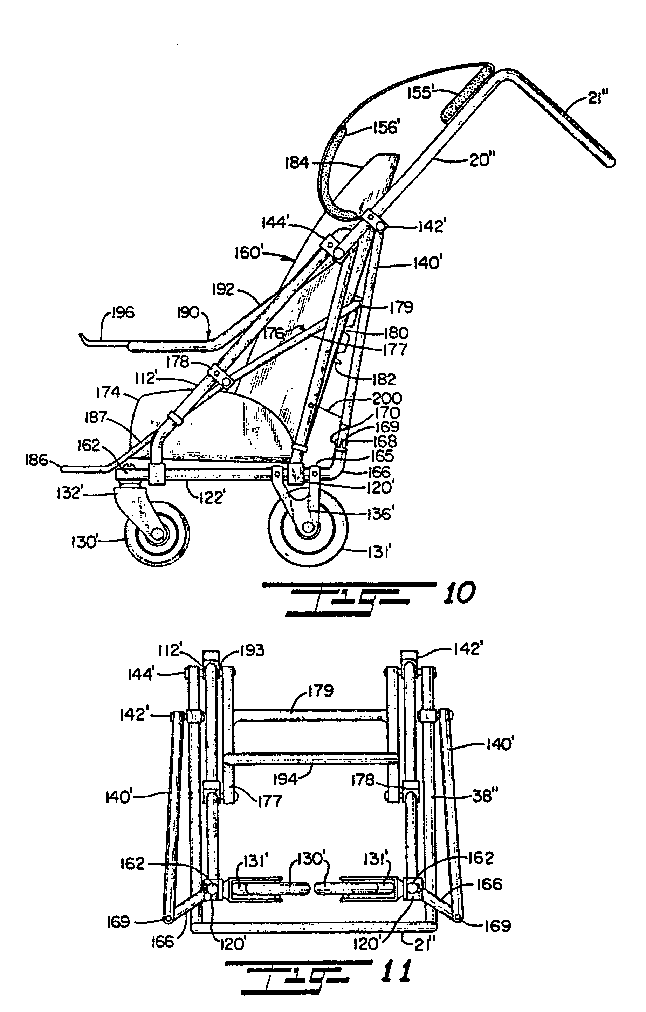

Referring in detail to the drawings, in Figures 1 to 6 a child carrier 10 is convertible for use as a stroller or car seat ; also, it can be used as a backpack carrier when in the semi-collapsed position, or adapted for use as a car seat, as shown in Figure 5. In the semi-collapsed position, the carrier is free-standing and can be placed on a level surface to support the infant with or without additional means of support. To this end, child carrier 10 has a seat mounting frame 12 for a seat portion 13 and a lower wheel assembly 14 including front and rear wheels 16 and 17, respectively, and a foot rest 18. An upper handle member 20 is pivotally connected to the juncture between the seat mounting frame 12 and wheel assembly 14 for swinging movement between a first position in which the handle member 20 extends rearwardly and upwardly from the seat mounting frame 12 when used as a stroller and a second position in which the handle member is folded downwardly with an angled end portion 21 of the handle member extending forwardly and spaced beneath the wheels 16 and 17 to define a planar base support or platform for supporting the entire carrier on a car seat or level surface.

The wheel assembly 14 includes front and rear leg members 24 and 25, respectively, extending from the seat mounting frame 12, the front leg members 24 comprising a pair of straight tubular frame members inclining forwardly and downwardly from a common axis, defined by a shaft 26. Opposite ends of the front leg members 24 are provided with connector blocks 27, each in the form of a sleeve-like fitting having an axially extending bore 28 into which the end of the leg member is inserted and attached by a rivet 28'. A transverse bore 29 has an inner lining or bearing 30 to receive the shaft 26.

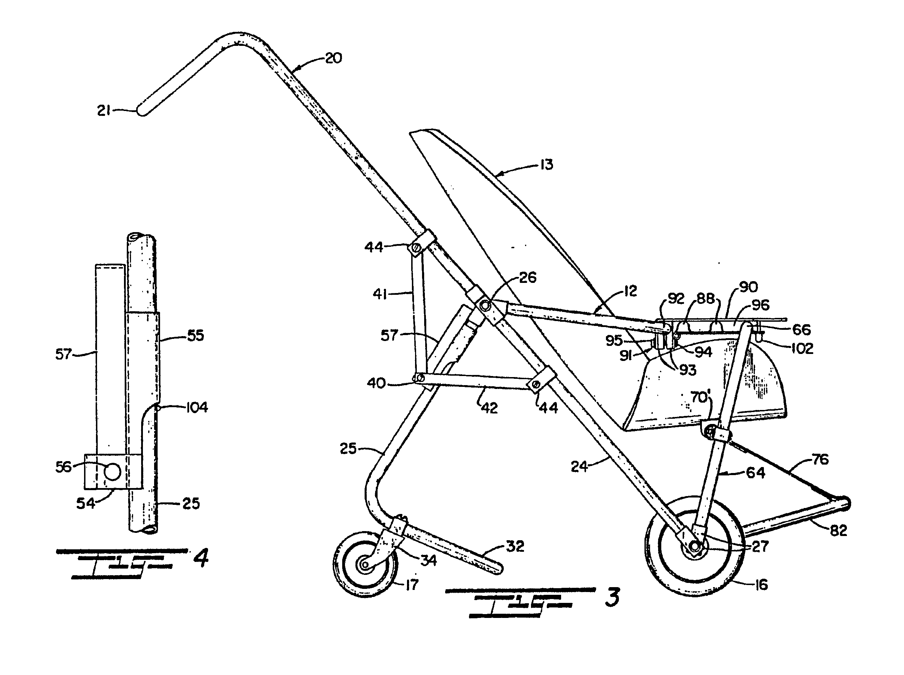

The rear leg members 25 form opposite sides of a common U-shaped frame, the sides 25 merging into a common lower end portion 32. As shown in Figures 1 to 3, the legs 25 extend from upper blocks 27 with the rear legs inclined rearwardly to terminate in the lower horizontal portion 32. Castors 34 are mounted on opposite sides of the lower end 32 at its juncture with the lower end of the rear legs 25 and connected by a common bar 35 between the castors 34. The rear wheels 17 are self-steerable and are suspended from the castors 34 in a conventional manner for maximum ease in steering or turning. Reinforcing wires 36 extend between the crossbar 35 and forward closed end of the lower end 32 as a support for infant accessories. As shown in Figure 2, a flexible net N extends from the end portion 32 upwardly for connection to the front legs 24 to enlarge the capacity of the end portion 32.

The handle member 20 is made up of opposite side members 38 which are directed into a common angled end portion 21 that inclines downwardly and rearwardly from the upwardly and rearwardly inclined side frame members 38, the end portion 21 defining the hand-engaging portion of the handle when the carrier is used as a stroller. Lower ends of the side frame members 38 have lower connector blocks 27 between the blocks 27 on the ends of the front legs 24 and rear legs 25. Foldable link assemblies 40 on opposite sides of the carrier including forwardly and upwardly inclining link members 41 and rearwardly and upwardly inclined link members 42 from a common pivotal axis on the rear leg members 25 beneath the shaft 26. Opposite ends of the links 41 and 42 have pivotal blocks 44, Figure 6A, of generally oblong configuration. Each block 44 has split ends 46 communicating with a common transverse bore 47, the latter provided with a bearing liner 48 to receive a tubular member of each of the front legs 24 and side frames 38 of the upper handle member. Each link 41 and 42 is in the form of a metal strap secured to one side of each pivot block 44 by a bolt 50 and tightening nut 51 on the opposite end, the bolt 50 passing through aligned bores in the end portions 46. Tightening of the nut 51 will cause the body of the block 44 to clampingly engage the frame member on either of the front leg or upper handle so as to effect a rigid mounting. A spacer 50' permits the links 41 and 42 to pivot as the handle member is folded and unfolded. At the common axis between the links 41 and 42, a pivot mount 54, as shown in Figure 4, projects laterally from a sleeve member 55 on each of the rear legs 25, and a pivot pin 56 is inserted through aligned openings at the adjoining ends of the links 41 and 42 and the mount 54. A U-shaped bracket 57 interconnects the pivot mounts 54 so that the sleeve members 55 are slidable in unison along the rear legs for advancement of each folding link assembly 40 between the position of Figure 1 and the collapsed position in Figure 5.

The seat mounting frame 12 is made up of a main frame tubular loop 60 having opposite side members 61 pivotally connected at their rearward free ends by pivot blocks 27 to the main pivot shaft 26, the side members extending horizontally in a forward direction from their pivotal connection into a generally circular end portion 62. In addition, a front support hoop 64 is of a U-shaped tubular frame construction having opposite sides 65 extending downwardly from a common closed end portion 66 adjacent to the closed end 62 of the main frame loop. Opposite sides 65 similarly have connector blocks 27 at lower free ends which are pivotally connected to a common axle 68 extending through the front wheels 16. A cross brace 70 extends between opposite sides 65 of the hoop 64 between the upper closed end 66 and lower ends, the brace 70 being attached to the sides 65 by clamp-type connector blocks 27. A strap 76 extends downwardly and forwardly from connection to the brace 70 with its lower end interconnected at 77 to a lower closed end 78 of footrest 18. The footrest 18 has opposite sides 82 extending horizontally and rearwardly from the closed end 78 for connection by blocks 27 to the axle 68 just inwardly of the front wheels 16, the strap 76 maintaining the footrest in a predetermined angular relationship to the seat portion 13.

The seat portion 13 is suitably made up of a foam plastic shell defining a lower horizontal seating portion 84 and upright portion 85 interconnected along a living hinge section 86. As seen from Figure 3, the seat portion is adjustable from an upright position, Figure 1, to a reclined position by adjusting the upper closed end 66 of the hoop 64 in a series of grooves 88 on a tray 90 which rests on the upper closed end 66 of the hoop 64. The tray 90 is of flat, semi-circular configuration and has a downwardly directed connector block 91 at its rearward end which includes a bore 92 to receive the forward closed end 62 of the main frame loop and split ends 93 which are adjustably clamped by a bolt 94 and nut 95. The grooves 88 are spaced along a pair of reinforcing bars 96 on the underside of the tray 90, and the upper closed end 66 of the hoop 64 is releasably held in place within each set of the grooves 88 by a strap member 98 which extends forwardly from a hinge section 100 on the side of the connector block 91 and beneath the bars 96, the forward end of the plate being releasably latched to the tray by latch 102.

The underside of seat portion 84 is attached by metal strap 70' to the cross brace 70 so as to follow the movement of the front hoop 64 with respect to the grooves 88 in adjusting the degree of inclination of the upright portion 85 of the seat. To this end, the latch 102 can be released away from the grooved bars 96 to swing the frame member 12 and tray 90 upwardly about the pivot point 26 and clear the upper closed end 66 sufficiently to permit the closed end 66 to be advanced into alignment with another set of grooves 88. Once positioned, the strap 99 is reattached by means of the latch 102. The footrest 80 follows movement of the hoop 64 in adjusting the seat portion 13 so as to maintain a fixed distance between the footrest 80 and seat 13.

In the construction of the carrier, the main frame components are of U-shaped tubular frame construction to minimize investment in production tooling as well as to minimize the concentration of stresses and avoid frame failures due to overstressed components. The main frame components can be assembled using the two types of connector blocks 27 and 44, although other types of standard connectors can be employed. In order to fold the carrier from the stroller position as shown in Figures 1 to 3 to the car seat or collapsed position shown in Figure 5, the folding link assemblies 40 are released and the handle 20 pivoted downwardly about the axis 26 until it is advanced into a position beneath the wheels. For this purpose, spring-loaded detents 104 are positioned beneath each of the sleeves 55 to normally retain the folding link assemblies 40 in the raised position. In the folded position, the wheels are spaced above the lower end of the handle to avoid soiling of the car seat. The handle is a firm base for the carrier and facilitates ease of strapping in the child by means of the standard seat belts furnished, as designated at A in Figure 5.

When the carrier is not in use it can be fully collapsed by the expedient of collapsing the handle 20 into the car seat position and swinging the foot rest 18 upwardly and rearwardly. The hoop 64 is disengaged from grooves 88 and moved rearwardly and the frame member 12 and affixed tray 90 can drop rearwardly to allow the closed end 78 of footrest 18 to engage the grooves 88. In use, the chair can be readily converted between a car seat and stroller position without removing the child in a one-step operation by folding the handle 20 in either direction as described. When folded beneath the wheels, suitable latch or catch maintains a fixed relationship between the handle 20 and rear castor frame 14. A canopy may extend from the handle portion over the seat portion.

In the modified form of Figures 7 to 9, a carrier 110 employs a folding handle 20' to serve as a support or base member which can be folded beneath the wheel assembly to convert the carrier from a stroller to a car seat or backpack carrier as illustrated in Figure 9. The carrier is more compact in that the lower wheel assembly is pivotal within the wheel frame when the handle is folded beneath the frame so that the handle can rest directly beneath the frame with the wheels raised within the frame and therefore permits the use of a somewhat shorter handle member 20'. Overall, the carrier has a much lower profile and is extremely compact so as to lend itself well for use as a backpack carrier.

Referring in more detail to the drawings, a pair of main frame members 112 are of inverted V-shaped configuration to define front and rear legs 113 and 114 diverging downwardly from an upper apex end 116 of each of the main frame members 112. Each front leg inclines more gradually in a vertical direction away from the closed end 116 than a respective rear leg 114, each front leg terminating in a lower bent vertical end 118 to which is affixed a connector block 120. Correspondingly, each rear leg 114 is affixed to a connector block 120 with a straight connecting bar 122 interconnecting the blocks 120 of each of the main frame members 112 so as to result in a generally triangular main frame member 112. The main frame members are interconnected by shafts 124 and 125 which extend between the connector blocks 120 at the lower terminal ends of the front and rear leg members, respectively.

In the modified form, each of the front and rear connector blocks 120 is generally square and has two counterbores, not shown, at right angles to one another for insertion of one of the legs and the bar 122, and a transverse through bore 128 is perpendicular to the conterbores for connection of the shafts 124 and 125. The ends of the shafts may be upset or fitted with end caps to retain the connector blocks.

Each front wheel 130 is journaled to a castor 132 which depends from a pivot arm 133, the latter pivotal at its midpoint about the axle 124 and inclining rearwardly and upwardly for connection to a pivot link 134 above the axle 124. The rear wheels 131 are independently journaled between a pair of suspension brackets 136 which extend downwardly from pivotal connection to the rear axle 125, and the pivot links 134 incline rearwardly and downwardly from their connections to the arms 133 for pivotal connection at 137 to an intermediate point on the brackets 136. Each pair of brackets 136 is of generally triangular configuration and its uppermost end 138 is pivotally connected to a pivot link 140 which extends downwardly from its connection to a pivotal connector block 142. Block 142 has split ends into which the upper end of the pivot link 140 is inserted and pivotally interconnected by a pivot pin 143 extending through aligned openings of the end members 144, as shown in Figure 8.

Handle 20' corresponds generally in construction to the handle member 20 but is of a shorter length and made up of side frame members 38' terminating in an upper angled end portion 21'. Each side frame member 38' is connected at its lower extremity to a pivotal connector block 144 which is securely affixed as shown to the upper closed end 116 of each of the main frame members 112. As seen from Figure 8, each block 144 has a split end 145 which receives the upper closed end of the main frame 112, and a pivot pin 146 is inserted through aligned openings in the ends 146, closed end 116 and lower extremity of side frame member 38' to complete the pivotal connection. The handle member 20' is noramlly retained in the stroller position, as shown in Figure 7, by a latch 150 which extends rearwardly from connection to the rear leg 114 of one of the main frame members 112 and terminates in a hook end 152 which releasably engages a catch, not shown, on the upper pivotal ends 138 of the suspension brackets 136. In order to collapse or fold the carrier into the car seat position, the latch 150 must be manually released to permit the handle 20' to be folded downwardly about its pivot 144 until it advances into the collapsed vertical position. As the handle portion is folded downwardly to a position beneath the wheel assembly, the pivot links 140 cause the rear suspension brackets 136 to pivot upwardly about the axle 125 and, through the pivot link 134, cause the front wheels 130 to pivot upwardly about the front axle 124 until the wheels assume the position illustrated in Figures 8 and 9 with the front wheels 130 disposed within or between the rear wheels 131. For purposes of clarity, seat portion 111 is not illustrated in Figures 8 and 9. However, the seat portion 111 may correspond to that illustrated in Figures 1 to 6 and is suitably attached by straps, not shown, to the main frame. Other suitable accessories may be added, such as, a foot rest and storage rack.

In use as a backpack carrier for an infant, a hip support pad 155 is affixed to the upper surfaces of the side frame members 38' by suitable means. When the handle is folded beneath the wheel frame assembly as in Figure 9, the hip support pad bears against the waist and hip region of the wearer. A pair of shoulder straps 156 are secured to the side frame members 38' for extension between the pivot blocks 142 and the lower edge of the hip support pad 155. The shoulder straps may be constructed to assure maximum comfort for the wearer. In the collapsed position, catch 158 on the inside of pad 155 is engaged by the latches 150 to prevent shifting between the main frame and handle portion.

In Figures 10 and 11, the carrier 160 is comprised of a main frame 112" corresponding to that of the main frame 112 of the first modified form and like parts are enumerated with prime numbers. The handle portion 20" corresponds to handle 20' including the hip support pad 155, shoulder pads 156 and a connection of pivot link 140' to upper pivotal connector 142'. However, the front and rear wheels 130' and 131' are mounted for pivotal movement about a lower connecting bar 122' which extends through connector blocks 120'. Castor 132' for each of the front wheels 130' is swiveled to a forward extension 162 of the connecting bar 122'. In turn, rear suspension brackets 136' have upper divided ends which terminate in sleeves 164 and 165 positively connected to the connecting bar 122' and rearward extension 166 on opposite sides of the rear connector block 120'. The rearward extension 166 continues beyond the rear connector block 120 and curves into an upwardly and rearwardly inclined portion which terminates in a flange or male end 168 adapted for insertion between split ends 169 at the lower extremity of the pivot link 140'. The male end 168 is insertable between the ends 169 and a pivot pin 170 extends through aligned openings in the complementary ends 168 and 169 to define a knuckle joint and make a pivotal connection between the extension 167 and pivot link 140'. The relative lengths of extension 167 and pivot link 140' are such that when the upper handle 20" is in the raised position of Figure 10 the pivot link 140' and extension 167 form a slight angle at the knuckle joint so that the pivot link 140 will cause the connector bar to rotate about its axis under downward urging of the pivot link until the wheels 130' and 131' have been rotated into a horizontal position flush with the connecting bars 122'. As the handle member 20' is folded about its pivot 144', the wheels are folded upwardly and inwardly into the space between the lower connecting bars 122' of the main frame 112', as in Figure 11. The angled end portion 21" of the handle advances beneath the wheels to serve as a base support for use as a car seat. In this position, it can be used as a backpack carrier.

In Figure 10, a seat portion 174 is adjustably positioned between the main frames 112' by a recliner frame 176, the recliner frame being U-shaped with opposite sides 177 connected at the lower free ends to a connector block 178 and an upper closed end 179 insertable into one of a series of grooves 180 in a plate 182 affixed to the upright portion 184 of the seat 174. Connector blocks 178 are attached to the front legs of the main frame with the recliner portion pivotally connected to the blocks so that as recliner frame 176 is pivoted, the back 184 is lowered or reclined rearwardly between the main frame members. A foot rest 186 is a U-shaped frame having opposite side members 187 terminating in upper free ends which are pivotally connected to the blocks 178 by inserting the upper ends into the lower tubular ends of the sides 176 of the recliner frame. In this way, the lower foot rest portion will follow the movement of the recliner frame and cause the lower foot rest 186 to be raised as the upper end of the recliner frame is lowered.

The seat portion 174 is mounted by retainer straps 188 which interconnect opposite sides of the seat with the front and rear legs of the main frame, the seat corresponding to that of Figure 1 wherein the upright portion is connected by a living hinge to the horizontal portion so that the upright portion follows movement of the recliner assembly. A retainer bar 190 is U-shaped with opposite sides 192 inclining downwardly and forwardly from pivotal connection 193 to insides of the pivotal connector block 144'. A lower portion 194 terminates in a closed end spaced above the forward edge of the seat portion and serves as a restraint member when the child is positioned in the carrier. In addition, the closed end 194 supports a tray clipped onto the closed end 194 to support food or playthings.

Releasable latches 200 are mounted on the rear legs of the main frame 112" and extend rearwardly for engagement with the pivot links 140 similar to the latch members 150 of Figures 7 to 9. However, the latch members will engage the pivot links 140' to prevent outward swinging movement of the pivot links until it is desired to fold the handle 20' into the collapsed position as described. Similarly, suitable stops are positioned at the pivotal connection between the bar 190 and the connector blocks 144' to limit downward swinging movement of the bar into the disposition of Figure 10. This bar may be swung upwardly and rearwardly for placement of the child into the carrier. The front tray portion 196 on the bar is not illustrated in Figure 11 ; nor is the foot rest portion 186 in the interest of more clearly illustrating the frame construction.

The preferred carriers have the ability to convert between a stroller and car seat mode, or a backpack carrier, Figures 7 to 11. By the folding action of the handle member, the child can remain the carrier as the handle is folded either from the stroller to the car seat mode or vice versa ; and in the car seat mode, each form will effectively prevent the wheels of the stroller from contacting and soiling the seat of the vehicle onto which the carrier is placed. Additional accessories can be employed, such as, folding racks or trays to transport accessory materials for the child or for other items, such as, groceries.

## Claims

1. A child carrier (10 ; 110 ; 160) having a seat-mounting frame and a lower wheel frame assembly depending downwardly from said seat-mounting frame, a seat portion (13 ; 111 ; 174) disposed on said seat-mounting frame and a handle member (20) normally extending rearwardly of said seat-mounting frame, said handle member terminating in a hand-engaging, angled end portion (21), wheek supported for downward extension from said wheel frame assembly, and pivot means (26 ; 146) pivotally interconnecting said handle member (20) to said seat-mounting frame for pivotal movement of said handle member about a horizontal axis from a first position in which said handle member extends rearwardly of said seat-mounting frame when in a raised position as a stroller to a lowered position in which said handle member is directed downwardly with said angled end portion (21) extending forwardly characterised by : said wheel frame assembly including front and rear wheels (16,17 ; 130,131), the handle member (20) in the lowered position extending in spaced relation beneath said wheels (16,17 ; 130,131) to support said carrier on a level surface with said wheels spaced above the level surface.

2. A child carrier according to claim 1, wherein said angled end portion (21) is directed horizontally in spaced relation beneath said wheels (16,17 ; 130,131) when in the lowered position to define a planar base support platform.

3. A child carrier according to claim 1 or claim 2, wherein the handle member (20) is constructed as a tubular L-shaped frame having side frame portions (38) angled upwardly then rearwardly and joined by a common frame member at the terminal end of said angled end portion (21), said wheel frame assembly has rear legs (25) and front legs (24), and the carrier includes a folding link member (41) between each of said side frame portions and one of said rear legs, means (104) normally retaining said folding link members in a position locking said handle member in said raised position, and means for releasing said folding link for downward swinging movement of said handle member into said lowered position in which said angled end portion underlies said wheels.

4. A child carrier according to claim 3, wherein said seat mounting frame includes a generally horizontally extending side frame (61,62) and a vertically extending front frame (65,66), said front frame connected at its lower end to said front leg members (24).

5. A child carrier according to any one of the preceding claims, wherein said front and rear wheels (130,131) are pivotally connected to said wheel frame assembly, and there are wheel release means (140) operative to cause said wheels to pivot from a downwardly extending position to a horizontally extending position.

6. A child carrier according to claim 5, wherein said wheel release means (140') urges said front and rear wheels (130', 131') to pivot inwardly towards one another about axes parallel to the forward direction of travel of said carrier.

7. A child carrier according to claim 5, wherein said wheel release means (140) are operative to cause said front and rear wheels (130, 131) to pivot about axes transverse to the forward direction of travel of said child carrier.

8. A child carrier according to claim 1 for interchangeable use as a stroller and a car seat carrier, in which a plurality of generally U-shaped frame members interconnect to define the seat-mouting frame, front and rear leg members (24, 25 ; 113, 114) depend downwardly from opposite sides of said seat-mounting frame, the front and rear wheels (16, 17 ; 130, 131) are journalled in spaced relation to one another on said front and rear leg members respectively ; and the handle member (20) is generally L-shaped and extends upwardly and rearwardly from opposite sides of said seat-mounting frame, the angled end portion (21) extending rearwardly and downwardly from upper ends of opposite sides of said upper handle ; the pivot means (26 ; 146) pivotally connecting opposite sides of said handle member (20) at its lower end to said seat-mounting frame for pivotal movement of said handle member from said raised position extendig upwardly when used as a stroller to said lowered position in which said angled end portion (21) is disposed in which said angled end portion (21) is disposed in spaced relation beneath said wheels whereby to support said child carrier on a car seat when used as a car seat carrier.

9. A child carrier according to claim 8, wherein said front and rear wheels (130, 131) are pivotally connected to said wheel frame assembly (112), and the carrier includes wheel release means (140) responsive to downward folding movement of said upper handle member (20) to cause said wheels to pivot from a downwardly extending position to a horizontally extending position.

10. A child carrier according to claim 9, wherein said wheel release means (140') urges said front and rear wheels (130', 131') to pivot inwardly towards one another about axes parallel to the forward direction of travel of said carrier.

11. A child carrier according to claim 9, wherein said wheel release means (140) are operative to cause said front and rear wheels (130, 131) to pivot about axes transverse to the forward direction of travel of said child carrier.

12. A child carrier according to claim 1 in which the wheel frame assembly (112) is of triangular configuration, said front and rear wheels are pivotally connected to said wheel frame assembly ; and the handle member (20') has side frame portions (38') extending upwardly from opposite sides of said wheel frame assembly, said side frame portions including an angled portion (21') extending rearwardly from said side frame portions when said handle member is in a raised position ; the pivot means (146) pivotally interconnecting said handle member (20') to said wheel frame assembly (112) for pivotal movement of said side frame portions (38') about a horizontal axis from a first raised position in which said side frame portions extend upwardly from said wheel frame assembly when used as a stroller to a lowered position in which said angled portion (21') extends forwardly in spaced relation beneath said wheels (130, 131) to define a planar base support.

13. A child carrier according to claim 12 including wheel release means (140) responsive to pivotal movement of said side frame portions (38') to cause said wheels to pivot from a downwardly extending position to a horizontally extending position.

## Ansprüche

1. Ein Kinderwagen (10 ; 110 ; 160) mit einem Sitzmontagerahmen und einer unteren Radrahmenanordnung, die sich nach unten von dem Sitzmontagerahmen erstreckt, einem Sitzteil (13 ; 111 ; 174), der auf dem Sitzmontagerahmen angeordnet ist, und mit einem Griffteil (20), das sich normalerweise nach hinten von dem Sitztmontagerahmen erstreckt, wobei das Griffteil in einem abgewinkelten Endteil (21) für die Handberührung endet, mit Rädern, die sich von der Radrahmenanordnung nach unten erstreckend gehaltert sind, und mit einer Schwenkeinrichtung (26; 146), die verschwenkbar das Griffteil (20) mit dem Sitzmontagerahmen für eine Verschwenkbewegung des Griffteils um eine horizontale Achse aus einer ersten Position, in welcher das Griffteil sich von dem Sitzmontagerahmen, wenn es in einer angehobenen Position ist, nach hinten erstreckt, zu einer abgesenkten Position, in welcher das Griffteil nach unten gerichtet ist, wobei der abgewinkelte Endteil (21) sich in Vorwärtsrichtung erstreckt, verbindet, **dadurch gekennzeichnet,** daß die Radrahmenanordnung Vorder- und Hinterräder (16, 17 ; 130, 131) enthält, und das Griffteil (20) sich in der abgesenkten Position im Abstand unter den Rädern (16, 17 ; 130, 131) erstreckt, um den Kinderwagen auf einer Niveauoberfläche abzustützen, wobei die Räder im Abstand über der Niveauoberfläche angeordnet sind.

2. Ein Kinderwagen nach Anspruch 1, wobei das in der abgesenkten Position abgewinkelte Endteil (21) horizontal im Abstand unterhalb der Räder (16, 17 ; 130, 131) ausgerichtet ist, um eine ebene Basisträgerplattform zu bilden.

3. Ein Kinderwagen nach Anspruch 1 oder 2, wobei das Griffteil (20) als ein röhrenförmiger L-förmiger Rahmen ausgebildet ist, welcher Seitenrahmenteile (38) aufweist, welche nach oben und dann nach hinten abgewinkelt sind und durch ein gemeinsames Rahmenteil am Anschlußende des abgewinkelten Endteils (21) verbunden sind, wobei die Radrahmenanordnung hintere Schenkel (25) und vordere Schenkel (24) aufweist, und der Kinderwagen ein Klappverbindungsteil (41) zwischen jedem der Seitenrahmenteile und einem der hinteren Schenkel enthält, eine Einrichtung (104), die normalerweise die Klappverbindungsteile in einer Position, in der das Griffteil in seiner angehobenen Position blockiert ist, festhält, und eine Einrichtung zum Lösen des Klappverbindungsteils für eine Schwenkbewegung des Griffteils nach unten in die abgesenkte Position, in welcher der abgewinkelte Endteil unter den Rädern liegt, enthält.

4. Kinderwagen nach Anspruch 3, wobei der Sitzmontagerahmen einen sich im wesentlichen horizontal erstreckenden Seitenrahmen (61, 62) und einen sich vertikal erstreckenden Frontrahmen (65, 66) enthält, wobei der Frontrahmen an seinem unteren Ende mit den vorderen Schenkelteilen (24) verbunden ist.

5. Ein Kinderwagen nach wenigstens einem der vorhergehenden Ansprüche, wobei die Vorder- und Hinterräder (130, 131) verschwenkbar mit der Radrahmenbaugruppe verbunden sind, und eine Radlöseeinrichtung (140) vorgesehen ist, die bewirkt, daß die Räder aus einer sich nach unten erstreckenden Position in eine sich horizontal erstreckende Position verschwenken.

6. Ein Kinderwagen nach Anspruch 5, wobei die Radlöseeinrichtung (140') auf die Vorder- und Hinterräder (130', 131') einwirkt, damit sie nach innen in Richtung aufeinander zu um eine Achse parallel zur Vorwärtsrichtung der Bewegung des Kinderwagens verschwenken.

7. Ein Kinderwagen nach Anspruch 5, wobei die Radlöseeinrichtung (140) in der Lage ist, zu bewirken, daß die Vorder- und Hinterräder (130, 131) um Achsen quer zur Vorwärtsrichtung der Bewegung des Kinderwagens verschwenken.

8. Ein Kinderwagen nach Anspruch 1, zum abwechselnden Gebrauch als leichter Kinderwagen bzw. Sportwagen und als Autokindersitz, in welchem eine Vielzahl von im wesentlichen U-förmigen Rahmenteilen miteinander verbunden sind, um einen Sitzmontagerahmen zu bilden, vordere und hintere Schenkelteile (24, 25 ; 113, 114) von gegenüberliegenden Seiten des Sitzmontagerahmens nach unten herabhängen, die Vorder- und Hinterräder (16, 17 ; 130, 131) beabstandet zueinander jeweils auf den vorderen und hinteren Schenkelteilen über Achsschenkel befestigt sind ; und das Griffteil (20) im wesentlichen L-förmig ist und sich nach oben und nach hinten von gegenüberliegenden Seiten des Sitzmontagerahmens erstreckt, wobei das abgewinkelte Endteil (21) sich nach hinten und nach unten von oberen Enden gegenüberliegender Seiten des oberen Griffs erstreckt, und wobei die Schwenkeinrichtung (25, 26 ; 146) verschwenkbar gegenüberliegende Seiten des Griffteils (20) an seinem unteren Ende mit dem Sitzmontagerahmen für eine Verschwenkbewegung des Griffteils von einer angehobenen, sich nach oben erstreckenden Position, beim Gebrauch als leichter Kinderwagen, zu einer abgesenkten Position, in welcher der abgewinkelte Endteil (21) im Abstand unter den Rädern angeordnet ist, um dadurch den Kinderwagen auf einem Wagensitz abzustützen, wenn er als Autokindersitz verwendet wird, verbindet.

9. Ein Kinderwagen nach Anspruch 8, wobei die Vorder und Hinterräder (130, 131) verschwenkbar mit der Radrahmenanordnung (112) verbunden sind, und der Kinderwagen eine Radlöseeinrichtung (140) enthält, die auf eine nach unten gerichtete Klappbewegung des oberen Griffteils (20) reagiert, um zu bewirken, daß die Räder von einer sich nach unten erstreckenden Position in eine sich horizontal erstreckende Position verschwenken.

10. Ein Kinderwagen nach Anspruch 9, wobei die Radlöseeinrichtung (140') auf die Vorder- und Hinterräder (13', 131') einwirkt, damit sie nach innen aufeinander zu um eine zur Vorwärtsrichtung der Bewegung des Kinderwagens parallele Achse verschwenken.

11. Ein Kinderwagen nach Anspruch 9, wobei die Radlöseeinrichtung (140) in der Lage ist, zu bewirken, daß die Vorder- und Hinterräder (130, 131) um Achsen quer zur Vorwärtsrichtung der Bewegung des Kinderwagens verschwenken.

12. Ein Kinderwagen nach Anspruch 1, worin die Radrahmenanordnung (112) eine Dreiecksform aufweist, die Vorder- und Hinterräder verschwenkbar mit der Radrahmenanordnung verbunden sind ; und das Griffteil (20') Seitenrahmenteile (38') aufweist, welche sich nach oben von gegenüberliegenden Seiten der Radrahmenanordnung erstrecken, wobei die Seitenrahmenteile einen abgewinkelten Teil (21') enthalten, welcher sich nach hinten von den Seitenrahmenteilen erstreckt, wenn das Griffteil in einer angehobenen Position ist ; und wobei die Schwenkeinrichtung (146) verschwenkbar das Griffteil (20') mit der Radrahmenanordnung (112) für eine Verschwenkbewegung der Seitenrahmenteile (38')

um eine horizontale Achse aus einer ersten angehobenen Position, in welcher sich die Seitenrahmenteile bei Gebrauch als ein leichter Kinderwagen nach oben erstrecken, zu einer abgesenkten Position, in welcher der abgewinkelte Teil (21') sich vorwärts im Abstand unter den Rädern (130, 131) erstreckt, um einen ebenen Basisträger zu bilden, verbindet.

13. Ein Kinderwagen nach Anspruch 12, welcher eine Radlöseeinrichtung (140) enthält, die auf eine Verschwenkbewegung der Seitenrahmenteile (38') reagiert, um zu bewirken, daß die Räder von einer sich nach unten erstreckenden Position zu einer sich horizontal erstreckenden Position verschwenken.

## Revendications

1. Chariot pour enfant (10 ; 110 ; 160) comportant un châssis de montage de siège et un assemblage de châssis de roues inférieures qui lui est lié et qui est dirigé vers le bas depuis le châssis de montage de siège, une partie formant siège (13 ; 111 ; 174) placée sur le châssis de montage de siège et un élément formant poignée (20) s'étendant perpendiculairement vers l'arrière du châssis de montage de siège, cet élément formant poignée se terminant en une extrémité recourbée (21) qui permet un engagement de la main, des roues supportées, pour une extension vers le bas, par l'assemblage de châssis de roues, et un moyen de pivot (26 ; 146) qui relie par pivotement l'élément formant poignée (20) au châssis de montage de siège pour permettre un mouvement de pivotement de l'élément formant poignée par rapport à un axe horizontal depuis une première position dans laquelle l'élément formant poignée s'étend vers l'arrière du châssis de montage de siège lorsque ce dernier est dans une position relevée pour une poussette jusqu'à une position abaissée dans laquelle l'élément formant poignée est dirigé vers le bas avec l'extrémité recourbée (21) s'étendant vers l'avant, caractérisé en ce que l'assemblage de châssis de roues comprend des roues avant et arrière (16, 17 ; 130, 131), l'élément formant poignée (20) dans la position abaissée s'étendant suivant une relation d'espacement au-dessous des roues (16, 17 ; 130, 131) afin de supporter le chariot sur une surface de niveau avec les roues espacées au-dessus de la surface de niveau.

2. Chariot pour enfant selon la revendication 1, dans lequel la partie d'extrémité recourbée (21) est dirigée horizontalement suivant une relation espacée en dessous des roues (16, 17 ; 130, 131) lorsque le chariot est dans une position abaissée afin de définir une plate-forme de support de base plane.

3. Chariot pour enfant selon la revendication 1 ou la revendication 2, dans lequel l'élément formant poignée (20) est constitué par un châssis tubulaire en forme de L qui comporte des parties de châssis latéral (38) recourbées vers le haut puis vers l'arrière et jointes par un élément de châssis commun au niveau de l'extrémité terminale de la partie d'extrémité recourbée (21), l'assemblage de châssis de roues comporte des pieds arrière (25) et des pieds avant (24), et le chariot comporte un élément d'articulation pliant (41) situé entre chacune des parties de châssis latéral et un des pieds arrière, un moyen (104) qui retient normalement les éléments d'articulation de pliage dans une position de blocage de l'élément formant poignée dans la position relevée, et un moyen qui permet de relâcher la liaison de pliage pour un mouvement de bascule vers le bas de l'élément formant poignée dans la position abaissée dans laquelle la partie d'extrémité recourbée est sous les roues.

4. Chariot pour enfant selon la revendication 3, dans lequel le châssis de montage de siège comporte un châssis latéral qui s'étend généralement à l'horizontale (61, 62) et un châssis avant qui s'étend verticalement (65, 66), le châssis avant étant relié au niveau de son extrémité inférieure aux éléments avant formant pieds (24).

5. Chariot pour enfant selon l'une quelconque des revendications précédentes, dans lequel les roues avant et arrière (130, 131) sont reliées par pivotement à l'assemblage de châssis de roues, et dans lequel il y a un moyen de relâchement de roues (140) qui agit pour forcer les roues à pivoter depuis une position qui s'étend vers le bas jusqu'à une position qui s'étend à l'horizontale.

6. Chariot pour enfant selon la revendication 5, dans lequel le moyen de relâchement de roues (140') force les roues avant et arrière (130', 131') à pivoter vers l'intérieur l'une vers l'autre par rapport à des axes parallèles à la direction avant de déplacement du chariot.

7. Chariot pour enfant selon la revendication 5, dans lequel le moyen de relâchement de roues (140) agit de manière à forcer les roues avant et arrière (130, 131) à pivoter autour d'axes perpendiculaires à la direction avant de déplacement du chariot d'enfant.

8. Chariot pour enfant selon la revendication 1 destiné à une utilisation interchangeable comme poussette et comme siège à voiture, dans lequel une pluralité d'éléments de châssis généralement en forme de U sont interconnectés de manière à définir le châssis de montage de siège, des éléments avant et arrière de pieds (24, 25 ; 113, 114) qui pendent vers le bas depuis des côtés opposés du châssis de montage de siège, les roues avant et arrière (16, 17 ; 130, 131) sont fixées suivant une relation d'espacement les unes par rapport aux autres sur les éléments avant et arrière formant pieds respectivement ; et l'élément formant poignée (20) est généralement en forme de L et s'étend vers le haut et vers l'arrière depuis des côtés opposés du châssis de montage de siège, la partie d'extrémité recourbée (21) s'étendant vers l'arrière et vers le bas depuis des extrémités supérieures des côtés opposés de la poignée supérieure ; le moyen de pivot (26 ; 146) reliant par pivotement des côtés opposés de l'élément formant poignée (20) au niveau de son extrémité inférieure au châssis de montage de siège pour permettre un mouvement de pivotement de l'élément formant poignée depuis la position relevée qui s'étend vers le haut lorsque le chariot est utilisé en poussette jusqu'à la position abaissée dans laquelle la partie d'extrémité recourbée (21) est disposée selon une relation d'espacement en dessous des roues, et de ce fait supporte le chariot pour enfant sur un siège de voiture lorsque le chariot est utilisé en siège à voiture.

9. Chariot pour enfant selon la revendication 8, dans lequel les roues avant et arrière (130, 131) sont reliées par pivotement à l'assemblage de châssis de roues (112), et le chariot comporte un moyen de relâchement de roues (140) sensible à un mouvement de pliage vers le bas de l'élément supérieur formant poignée (20) de manière à forcer les roues à pivoter depuis une position qui s'étend vers le bas jusqu'à une position qui s'étend horizontalement.

10. Chariot pour enfant selon la revendication 9, dans lequel le moyen de relâchement de roues (140') force les roues avant et arrière (130', 131') à pivoter vers l'intérieur l'une par rapport à l'autre par rapport à des axes parallèles suivant la direction avant de déplacement du chariot.

11. Chariot pour enfant selon la revendication 9, dans lequel le moyen de relâchement de roues (140) fonctionne de manière à forcer les roues avant et arrière (130, 131) à pivoter autour d'axes perpendiculaires à la direction avant de déplacement du chariot d'enfant.

12. Chariot pour enfant selon la revendication 1, dans lequel l'assemblage de châssis de roues (112) a une configuration triangulaire, les roues avant et arrière sont reliées de manière à pivoter par rapport à l'assemblage de châssis de roues ; et l'élément formant poignée (20') comporte des parties de châssis latéral (38') qui s'étendent vers le haut depuis des côtés opposés de l'assemblage de châssis de roues, les parties de châssis latérales incluant une partie recourbée (21') qui s'étend vers l'arrière depuis des parties de châssis latérales lorsque l'élément formant poignée est dans une position relevée ; le moyen de pivot (146) reliant par pivotement l'élément formant poignée (20') à l'assemblage de châssis de roue (112) pour permettre un mouvement de pivotement des parties de châssis latéral (38') par rapport à un axe horizontal depuis une première position relevée dans laquelle les parties de châssis latéral s'étendent vers le haut depuis l'assemblage de châssis de roues lorsque le chariot est utilisé en poussette jusqu'à une position abaissée dans laquelle la partie recourbée (21') s'étend vers l'avant dans une relation d'espacement en dessous des roues (130, 131) afin de définir un support de base plan.

13. Chariot pour enfant selon la revendication 12 comportant un moyen de relâchement de roues (140) sensible à un mouvement de pivotement des parties de châssis latéral (38') de manière à forcer les roues à pivoter depuis une position qui s'étend vers le bas jusqu'à une position qui s'étend à l'horizontale.

_Fig. 1_

_Fig. 2_

FIG 6

FIG 6A

FIG 5

_Fig_ 7

_Fig_ 8

_Fig_ 9

*Fig. 10*

*Fig. 11*